# EUROPÄISCHE PATENTSCHRIFT

(11) **EP 2 794 227 B1**
(45) Veröffentlichungstag und Bekanntmachung des Hinweises auf die Patenterteilung: **07.11.2018**
(21) Anmeldenummer: 12783994.2
(22) Anmeldetag: 08.11.2012
(51) Int. Cl.: B29C 47/02, B29C 47/12, B29C 47/16, B29C 47/92, B29C 47/94

(54) **EXTRUSIONSDÜSE UND VERFAHREN ZUR AUSBRINGUNG EINES KONTINUIERLICH VARIABLEN PROFILSTRANGES**
EXTRUSION NOZZLE AND METHOD FOR PRODUCING A CONTINUOUSLY VARIABLE PROFILED STRIP
BUSE D'EXTRUSION ET PROCÉDÉ DESTINÉE À PRODUIRE UNE BANDE PROFILÉE VARIABLE EN CONTINU

(30) Priorität: 23.12.2011 EP 11195528
(43) Veröffentlichungstag der Anmeldung: 29.10.2014
(73) Patentinhaber: Saint-Gobain Glass France, 92400 Courbevoie (FR)
(72) Erfinder: KÖTTE, Rolf, 52477 Alsdorf (DE); GERADS, Manfred, 52511 Geilenkirchen (DE); KLEYER, Dieter, 52146 Würselen (DE); BUMANN, Stefan, 52146 Monschau (DE)
(74) Vertreter: Lendvai, Tomas
(86) Internationale Anmeldenummer: PCT/EP2012/072112
(87) Internationale Veröffentlichungsnummer: WO 2013/091988

(56) Entgegenhaltungen:
- EP-A1- 0 081 093
- EP-A1- 0 407 364
- EP-A1- 0 634 263
- DE-T2- 69 718 385
- JP-A- 8 197 606
- JP-A- 10 086 206
- US-A- 5 233 805
- US-B1- 6 174 477
- US-E1- R E37 737

## Beschreibung

Die Erfindung betrifft eine Extrusionsdüse mit einer regulierbaren Düsenöffnung zum Erzeugen eines kontinuierlich variablen Profilstranges.
Die Herstellung von Dichtungen an verschiedenen Fahrzeugkomponenten besitzt in der Automobilindustrie einen hohen Stellenwert. Insbesondere Glasscheiben müssen vor dem Einbau in die dafür vorgesehenen Stellen der Karosserie mit Dichtelementen versehen werden. Häufig eingesetzte Dichtelemente umfassen Polymere wie Polyurethane, Polyolefine, Polysulfide, Polyepoxide und Kautschuk wie Naturkautschuk, Styrol-Butadien-Kautschuk, Butadien-Acrylnitril-Kautschuk, Ethylen-Propylen-Dien-Kautschuk (EPDM), Silikone wie RTV(raumtemperturvernetzenden-Silikonkautschuk, HTV-(hochtemperturvernetzenden) Silikonkautschuk, peroxidischvernetzten-Silikonkautschuk und/oder additionsvernetzten-Silikonkautschuk, Polyacrylate und/oder Thermoplastische Elastomere. Diese Dichtelemente dienen dem Wassermanagement und können das Eindringen von Feuchtigkeit verhindern. Ferner wird dadurch die Entwicklung von störenden Fahrgeräuschen wie Pfeifgeräuschen im Fahrgastraum verhindert. Eine weitere wichtige Funktion ist das spannungsfreie, reproduzierbare und stabile Einsetzen der Glaselemente in die dafür vorgesehene Aussparung in der Karosserie des Fahrzeugs. Eine etablierte Methode zur Herstellung von Dichtungen an Glasscheiben ist die Extrusion und das anschließende Aushärten einer Polymermasse, beispielsweise Polyurethan, zu einem Profilstrang, bzw. das Abkühlen bei der Benutzung von thermoplastischen Materialien. Gegebenenfalls kann zur Vorbereitung auch ein Primer aufgetragen werden. Die Bildung des Profilstranges erfolgt entweder auf molekularer Ebene, beispielsweise durch Lebende Polymerisation, Kettenpolymerisation, Polykondensation, Polyaddition oder bei Thermoplastischen Elastomeren durch Erwärmen und anschließendes Abkühlen. Zur Verbesserung der elastischen Eigenschaften kann sich noch eine Polymervernetzung, beispielsweise durch Temperaturerhöhung, Luftfeuchtigkeit, Sauerstoffzugabe anschließen. Zum besseren Einbau in die Karosserie und zur Erhöhung der Stabilität und Dichtigkeit umfasst der Profilstrang in vielen Fällen noch Stützlippen (Dichtlippe, Zentrierung). Diese Lippen können über entsprechend geformte Extrusionsdüsen gleichzeitig mit dem eigentlichen Profilstrang hergestellt werden. Entsprechend der Scheibengeometrie kann die Lage, Größe und Form des Profilstranges und auch der Lippe variieren.

DE 196 04 397 C1 offenbart eine Vorrichtung zum Anextrudieren eines rahmenförmigen Profilstranges an einer Glasscheibe. Die Extrusionsdüse weist einen verlängerten Lippenspalt auf, welcher am Ende durch einen Schieber abgedeckt werden kann.

DE 42 32 554 C1 offenbart ein Verfahren zur Herstellung einer mit einem angeformten Rahmen aus einem thermoplastischen Polymer versehenen Glasscheibe und eine entsprechende Vorrichtung. Die zu bearbeitende Glasscheibe wird dazu vor der eigentlichen Extrusion auf ein beheiztes Formbett abgelegt, welches die Glasscheibenränder überragt. Der erzeugte Profilstrang überragt die Glasscheibe entsprechend dem Formbett.

DE 39 30 414 A1 offenbart eine Glasscheibe mit profiliertem Rahmen, welcher durch Extrusion und Aushärten auf der Scheibe hergestellt wird.

EP 0 407 364 A1 beschreibt einen Dichtungsstreifen, der geeignet ist um auf den Rand einer Öffnung aufgesetzt zu werden, eine Extrusionsdüse zur Herstellung des Dichtungsstreifens sowie ein Verfahren zu dessen Herstellung. Der Dichtungsstreifen umfasst ein Verankerungsprofil und ein röhrenförmiges Dichtungsprofil, welches mit dem Verankerungsprofil coextrudiert ist.

US RE37,737 E beschreibt ein Windschutzscheibenformteil für Kraftfahrzeuge, das den Raum zwischen Windschutzscheibe und Fahrzeugkarosserie abdichtet. Ferner wird ein Verfahren sowie eine Extrusionsdüse zu dessen Herstellung offenbart.

US 6 174 477 B1 offenbart eine Fensterrahmenleiste für ein Kraftfahrzeug, eine Vorrichtung, sowie ein Verfahren zur Herstellung der Fensterrahmenleiste. Das Verfahren und die Vorrichtung stellen eine Fensterrahmenleiste mit hoher Genauigkeit bei verbesserter Produktivität des Prozesses bereit.

EP 0 081 093 A1 offenbart eine Strangpresse mit einer formgebenden Strandpressdüse zum Herstellen von Profilsträngen aus elastomerem Werkstoff.

In JP H 10 86206 A wird ein Verfahren und eine Vorrichtung zur Herstellung eines Fensterformteils für Kraftfahrzeuge beschrieben.

JP H 08 197606 A offenbart ein Fensterformteil für Kraftfahrzeuge mit verbessertem Wasserablauf und niedrigen Herstellungskosten.

US 5 233 805 A beschreibt ein Formteil für ein Frontglas für Kraftfahrzeuge und eine Formvorrichtung zur Herstellung dessen. Insbesondere wird ein Formteil zum Einpassen in den zwischen der Umfangskante eines Automobilfrontglases und einem Fensterrahmen bestehenden Spalt einer Kraftfahrzeugkarosserie beschrieben.

DE 697 18 385 T2 betrifft ein Zierelement für ein Kraftfahrzeug sowie ein Verfahren und eine Vorrichtung zu dessen Herstellung. Die Vorrichtung umfasst eine Strangpressdüsenbaueinheit mit einer stationären Düse, einer ersten beweglichen Düse und einer zweiten beweglichen Düse, wobei die erste bewegliche Düse und die zweite bewegliche Düse parallel zueinander verschiebbar sind.

Aufgrund der nicht regel- oder gleichmäßigen Geometrie vieler Automobilkarosserien muss in vielen Fällen im selben Bauteil auch die Breite oder Höhe des Profilstranges sowie auch die Ausbildung der Lippe variiert werden. Auch mehrmalige Wechsel der Profilstranggeometrie sind bei vielen Anwendungen notwendig. Diese vom Werkstück und Karosse vorgegebenen Änderungen des Profilstranges machen eine Modifizierung der Austrittsöffnung der Extrusionsdüse oder gar ihren Austausch erforderlich. Neben der Fläche der Austrittsöffnung muss häufig gleichzeitig auch die Breite des Spaltes zur Ausbildung der Lippe reproduzierbar variiert werden.

Die Aufgabe der Erfindung liegt darin, eine Extrusionsdüse zur Ausbringung eines variablen Profilstranges bereitzustellen, welche eine gleichzeitige Änderung der Geometrie sowohl des Profilstranges als auch der Profillippe ermöglicht.

Die Erfindung offenbart eine Extrusionsdüse zur Ausbringung eines variablen Profilstranges. Die Extrusionsdüse umfasst mindestens einen Extrusionsdüsenkörper mit einer Düsenöffnung und einem Schieber vor der Düsenöffnung. Die Düsenöffnung umfasst eine Hauptöffnung zum Ausformen des Profilstranges und eine mit der Hauptöffnung verbundene Ausbuchtung zum Ausformen einer mit dem Profilstrang verbundenen Lippe. Der Schieber umfasst einen hintereinander angeordneten und miteinander über eine Gleitführung verbundenen ersten Teilschieber und einen zweiten Teilschieber, wobei der erste Teilschieber und der zweite Teilschieber in der Bewegung miteinander gekoppelt sind und wobei der erste Teilschieber vertikal verschiebbar ist um die Hauptöffnung zu verkleinern und der zweite Teilschieber horizontal verschiebbar ist um die Ausbuchtung zu verkleinern.

Der Durchmesser der Düsenöffnung wird parallel zu der zu beschichtenden Fläche bestimmt. Der Extrusionsdüsenkörper umfasst bei der Verwendung eines thermoplastischen Polymers
bevorzugt einen Zuführungskanal für den Transport des geschmolzenen Polymers zur Düsenöffnung.

Vor der Düsenöffnung ist ein Schieber angeordnet, welcher Teilbereiche der Düsenöffnung verstellbar verdecken kann und somit die Form und Geometrie des resultierenden Profilstranges verändern kann. Der Schieber umfasst mindestens einen hintereinander angeordneten ersten Teilschieber und einen zweiten Teilschieber. Der erste Teilschieber und der zweite Teilschieber sind miteinander über eine Gleitführung, bevorzugt Nut-Federsystem, besonders bevorzugt formschlüssige Führung, insbesondere Schwalbenschwanz, oder T-Nut verbunden. Der Ausdruck "Feder" umfasst im Sinne der Erfindung eine in der Einkerbung der Nut verschiebbare Vorrichtung. Insbesondere die formschlüssige Führung über die Schwalbenschwanzverbindung verhindert dabei ein Ablösen des ersten Teilschiebers und des zweiten Teilschiebers voneinander. Der erste Teilschieber und der zweiten Teilschieber sind in der Bewegung miteinander gekoppelt. Der erste Teilschieber ist vertikal und der zweite Teilschieber horizontal in Bezug auf die Düsenöffnung verschiebbar. Die Gleitführung ermöglicht somit eine gleichzeitige Verschiebung des ersten Teilschiebers entlang der Mittelachse der Extrusionsdüse und des zweiten Teilschiebers orthogonal zur Mittelachse der Extrusionsdüse. Der erste Teilschieber und der zweiten Teilschieber ermöglichen eine kontinuierliche Variation der Form und Geometrie des Profilkörpers.

Der erste Teilschieber umfasst bevorzugt die Feder, der zweite Teilschieber die Nut. Der erste Teilschieber kann somit über die beispielsweise angefräste Feder innerhalb der Nut des zweiten Teilschiebers verschoben werden.

Die Gleitführung umfasst besonders bevorzugt ein Schmiermittel zwischen der Feder und der Nut, welches die zwischen der Nut und Feder vorhandenen Reibungskräfte reduziert.

Die Düsenöffnung umfasst eine Hauptöffnung zum Ausformen eines Profilstranges (Extrusionsstranges) und eine mit der Hauptöffnung verbundene Ausbuchtung zum Ausformen einer mit dem Profilstrang verbundenen Lippe. Die Hauptöffnung und die Ausbuchtung gehen bevorzugt fließend ineinander über. Die Ausbuchtung umfasst bevorzugt 30 % bis 70 % des maximalen Durchmessers im Querschnitt der Düsenöffnung ohne Schieber.

Der erste Teilschieber weist bevorzugt eine Einkerbung im Bereich der Düsenöffnung auf. Die Einkerbung ermöglicht entsprechend der gewünschten Anwendungsform eine weitere Variation der Profilstranghöhe.

Der zweite Teilschieber weist bevorzugt eine Einkerbung im Bereich der Düsenöffnung auf. Die Einkerbung ermöglicht entsprechend der gewünschten Anwendungsform eine weitere Variation der Lippengröße.

Der Ausdruck "im Bereich der Düsenöffnung" definiert den Abschnitt des Teilschiebers welcher direkt über oder benachbart zu der Düsenöffnung verschoben werden kann und die Ausdehnung der Düsenöffnung beeinflusst.

Der Extrusionsdüsenkörper umfasst bevorzugt einen ersten Zuführungskanal und einen zweiten Zuführungskanal für den Transport des geschmolzenen thermoplastischen Polymers zur Düsenöffnung. Zwei Zuführungskanäle ermöglichen ein Mischen von verschiedenen Polymeren im Bereich vor oder in der Düsenöffnung. Der erste Zuführungskanal und/oder zweite Zuführungskanal enthalten bevorzugt Steuerventile, so das eine gezielte Regulierung der Polymermenge und Polymerzusammensetzung möglich ist.

Der erste Teilschieber verkleinert bevorzugt die Hauptöffnung um mindestens 50 %, besonders bevorzugt um mindestens 70 %. Die Angaben beziehen sich auf die maximale Verschiebung zur Schließung der Hauptöffnung des ersten Teilschiebers. Die Verkleinerung der Hauptöffnung ermöglicht eine gezielte Variation der Profilstranggröße.

Der zweite Teilschieber verkleinert bevorzugt die Ausbuchtung um mindestens 50 %, besonders bevorzugt um mindestens 70 %. Die Angaben beziehen sich auf die maximale Verschiebung zur Schließung der Ausbuchtung des zweiten Teilschiebers. Die Verkleinerung der Hauptöffnung ermöglicht eine gezielte Variation der Lippengröße.

Der Extrusionsdüsenkörper und/oder Teilschieber enthalten bevorzugt Metalle oder temperaturstabile Kunststoffe, bevorzugt Eisen, Chrom, Kobalt, Nickel, Titan, Mangan, Aluminium, Chrom, Niob, Wolfram, Molybdän, Vanadium und/oder Gemische oder Legierungen davon.

Die Düsenöffnung weist bevorzugt eine Fläche innerhalb eines gedachten Rechtecks mit den Kantenlängen 5 mm bis 50 mm und 2 mm bis 20 mm, bevorzugt innerhalb eines gedachten Rechtecks mit den Kantenlängen 10 mm bis 30 mm und 5 mm bis 15 mm auf. Die genaue Geometrie der Düsenöffnung ist dabei variabel und hängt von der späteren Form der extrudierten Profildichtung ab.

Die Düsenöffnung weist bevorzugt einen maximalen Durchmesser (a) von 0,1 cm bis 3 cm, bevorzugt 0,5 cm bis 2 cm auf.

Die Düsenöffnung weist bevorzugt eine maximale Höhe im Querschnitt von 0,1 cm bis 3 cm, bevorzugt 0,5 cm bis 2 cm auf.

In einer alternativen Ausgestaltung umfasst die erfindungsgemäße Extrusionsdüse zur Ausbringung eines variablen Profilstranges mindestens einen Extrusionsdüsenkörper und eine Düsenöffnung in dem Extrusionsdüsenkörper. Vor der Düsenöffnung ist ein horizontal beweglicher Führungsschieber angeordnet. Der Führungsschieber umfasst einen ersten Führungsschieberarm mit einer ersten Führungsöffnung und einen zweiten Führungsschieberarm mit einer zweiten Führungsöffnung.

Die Extrusionsdüse umfasst des Weiteren im Bereich der Führungsschieberarme ein erstes Schwenkprofilelement mit einem abstehenden ersten Führungszylinder und ein zweites Schwenkprofilelement mit einem abstehenden zweiten Führungszylinder. Der erste Führungszylinder ist innerhalb der ersten Führungsöffnung und der zweite Führungszylinder ist innerhalb der zweiten Führungsöffnung beweglich gelagert. Gleichzeitig sind das erste Schwenkprofilelement und das zweite Schwenkprofilelement parallel zum Führungsschieber vor der Düsenöffnung drehbar.

Der Führungszylinder umfasst bevorzugt Schrauben, welche zentral das Schwenkprofilelement durchstoßen oder auf der Oberfläche des Schwenkprofilelementes abstehend befestigt sind. Die genaue Position des Führungszylinders innerhalb oder auf dem Schwenkprofilelement ist variabel wählbar. Der Führungszylinder ist fest mit dem Schwenkprofilelement verbunden und erlaubt eine Drehung des Schwenkprofilelements durch Drehung des Führungszylinders innerhalb der Führungsöffnung der Führungsschieberarme. Das erste Schwenkprofilelement und das zweite Schwenkprofilelement weisen eine Ausbuchtung auf. Die Form der Ausbuchtung ist wie die Form der Düsenöffnung von der Form des zu extrudierenden Formkörpers abhängig.

Die erste Führungsöffnung und/oder die zweite Führungsöffnung umfassen bevorzugt ein Schmiermittel. Das Schmiermittel, bevorzugt ein Schmiermittel auf Mineral- oder Silikonölbasis, verringert die Reibungskräfte zwischen dem Rand der Führungsöffnung und dem entsprechenden Führungszylinder.

Das erste Schwenkprofilelement und/oder das zweite Schwenkprofilelement weisen bevorzugt eine Einkerbung auf. Die Einkerbung ermöglicht in Abhängigkeit von der Stellung der Schwenkprofilelemente eine weitere Variation der Geometrie des extrudierten Profilstrangs.

Die Düsenöffnung umfasst bevorzugt eine Hauptöffnung zum Ausformen eines Profilstranges (Extrusionsstranges) und eine mit der Hauptöffnung verbundene Ausbuchtung zum Ausformen einer mit dem Profilstrang verbundenen Lippe. Die Hauptöffnung und die Ausbuchtung gehen bevorzugt fließend ineinander über. Die Ausbuchtung umfasst bevorzugt 30 % bis 70 % des maximalen Durchmessers im Querschnitt der Düsenöffnung ohne Schieber.

Das erste Schwenkprofilelement und/oder zweite Schwenkprofilelement weisen bevorzugt eine Schwenkprofilelementöffnung auf. Die Schwenkprofilelementöffnung ermöglicht in Abhängigkeit von der Stellung der Schwenkprofilelemente eine weitere, diskontinuierliche Variation der Geometrie des extrudierten Profilstrangs. Die Schwenkprofilelementöffnung weist bevorzugt die gleichen Abmessungen wie die Düsenöffnung auf.

Der Extrusionsdüsenkörper umfasst bevorzugt einen ersten Zuführungskanal und einen zweiten Zuführungskanal für den Transport des geschmolzenen thermoplastischen Polymers zur Düsenöffnung. Zwei Zuführungskanäle ermöglichen ein Mischen von verschiedenen Polymeren im Bereich vor oder in der Düsenöffnung. Der erste Zuführungskanal und/oder
zweite Zuführungskanal enthalten bevorzugt Steuerventile, sodass eine gezielte Regulierung der Polymermenge und Polymerzusammensetzung möglich ist.

Der Führungsschieber ist bevorzugt über eine Gleitführung mit dem Extrusionsdüsenkörper verbunden. Die Gleitführung umfasst bevorzugt Nut-Federsysteme, besonders bevorzugt eine formschlüssige Führung, insbesondere Schwalbenschwanz, oder T-Nut. Der Ausdruck "Feder" umfasst im Sinne der Erfindung eine in der Einkerbung der Nut verschiebbare Vorrichtung. Insbesondere die formschlüssige Führung über die Schwalbenschwanzverbindung verhindert dabei ein Ablösen des Führungsschiebers vom Extrusionsdüsenkörper. In einer alternativen Ausgestaltung ist der Führungsschieber über ineinander bewegliche Schienen mit dem Extrusionsdüsenkörper verbunden.

Der Extrusionsdüsenkörper und/oder das Schwenkprofilelement enthalten bevorzugt Metalle oder temperaturstabile Kunststoffe, bevorzugt Eisen, Chrom, Kobalt, Nickel, Titan, Mangan, Aluminium, Chrom, Niob, Wolfram, Molybdän, Vanadium und/oder Gemische oder Legierungen davon.

Die Düsenöffnung weist bevorzugt einen maximalen Durchmesser (a) von 0,1 cm bis 3 cm, bevorzugt 0,5 cm bis 2 cm auf.

Die Düsenöffnung weist bevorzugt eine maximale Höhe im Querschnitt von 0,1 cm bis 3 cm, bevorzugt 0,5 cm bis 2 cm auf.

Die Düsenöffnung weist bevorzugt eine Fläche innerhalb eines gedachten Rechtecks mit den Kantenlängen 5 mm bis 50 mm und 2 mm bis 20 mm, bevorzugt innerhalb eines gedachten Rechtecks mit den Kantenlängen 10 mm bis 30 mm und 5 mm bis 15 mm auf. Die genaue Geometrie der Düsenöffnung ist dabei variabel und hängt von der späteren Form der extrudierten Profildichtung ab.

Die Erfindung umfasst des Weiteren ein Verfahren zur Extrusion eines Profilstrangs auf einem Substrat, bevorzugt Glas oder Kunststoff. Der Profilstrang wird über ein Polymer gebildet, welches über eine erfindungsgemäße Extrusionsdüse auf einem Substrat aufgebracht wird. In Abhängigkeit von der Ausgestaltung und der Positionierung der

Schwenkprofilelemente lässt sich die extrudierte Profilkörpergeometrie diskontinuierlich varieren. Das Polymer umfasst Polyurethane, Polyolefine, Polysulfide, Polyepoxide und Kautschuk wie Naturkautschuk, Nitrilkautschuk (NBR) Styrol-Butadien-Kautschuk, Butadien-Acrylnitril-Kautschuk, Ethylen-Propylen-Dien-Kautschuk, Silikone wie RTV-(raumtemperturvernetzenden-Silikonkautschuk), HTV-(hochtemperturvernetzenden) Silikonkautschuk, peroxidischvernetzten-Silikonkautschuk und/oder additionsvernetzten-Silikonkautschuk Polyacrylate und/oder Thermoplastische Elastomere. Die Thermoplastischen Elastomere (TPE) umfassen bevorzugt TPE-O (Olefinbasis), TPE-V (Vernetzte) und/oder TPE-U (Polyurethane), besonders bevorzugt Styrol/Butadien-Blockcopolymere (SBS) und/oder Ethylen-Propylen-Dien-Kautschuk (EPDM). Das Substrat umfasst Glas und/oder Polymere, bevorzugt Flachglas, Floatglas, Quarzglas, Borosilikatglas, Kalk-Natron-Glas, Polymethylmethacrylat, Polycarbonat und/oder Gemische davon.

Die Erfindung umfasst des Weiteren ein Verfahren zur kontinuierlichen Extrusion eines variablen Profilstrangs auf einem Substrat, bevorzugt Glas oder Kunststoff. Der Profilsstrang wird über ein Polymer gebildet, welches über eine erfindungsgemäße Extrusionsdüse auf einem Substrat aufgebracht wird. Durch Variation des ersten Teilschiebers und des zweiten Teilschiebers lässt sich die Form und Geometrie des Profilstrangs kontinuierlich varieren. Das Polymer umfasst wie Polyurethane, Polyolefine, Polysulfide, Polyepoxide und Kautschuk wie Naturkautschuk, Nitrilkautschuk (NBR) Styrol-Butadien-Kautschuk, Butadien-Acrylnitril-Kautschuk, Ethylen-Propylen-Dien-Kautschuk, Silikone wie RTV(raumtemperturvernetzenden-Silikonkautschuk, HTV-(hochtemperturvernetzenden) Silikonkautschuk, peroxidischvernetzten-Silikonkautschuk und/oder additionsvernetzten-Silikonkautschuk Polyacrylate und/oder Thermoplastische Elastomere. Die Thermoplastischen Elastomere (TPE) umfassen bevorzugt TPE-O (Olefinbasis), TPE-V (Vernetzte) und/oder TPE-U (Polyurethane), besonders bevorzugt Styrol/Butadien-Blockcopolymere (SBS) und/oder Ethylen-Propylen-Dien-Kautschuk (EPDM). Das Substrat umfasst Glas und/oder Polymere, bevorzugt Flachglas, Floatglas, Quarzglas, Borosilikatglas, Kalk-Natron-Glas, Polymethylmethacrylat, Polycarbonat und/oder Gemische davon.

Die Erfindung umfasst des Weiteren die Verwendung der erfindungsgemäßen Extrusionsdüse zur Extrusion eines Profilstranges auf Glas, Polymeren oder Metallen, bevorzugt zur
Extrusion eines Profilstranges auf einer Fahrzeugverglasung, Unterbodenabdeckung oder Schläuchen.

Die erfindungsgemäße Extrusionsdüse wird bevorzugt zur Extrusion eines variablen Profilstranges verwendet. Der erste Teilschieber und der zweite Teilschieber ermöglichen eine variable Steuerung der Profilstranggröße und der Lippengröße.

Im Folgenden wird die Erfindung anhand von Zeichnungen näher erläutert. Die Zeichnung ist eine rein schematische Darstellung und nicht maßstabsgetreu. Sie schränkt die Erfindung in keiner Weise ein.
Figur 1 eine räumliche Ansicht der Extrusionsdüse mit geöffneter Düsenöffnung,
Figur 2 eine Seitenansicht der Extrusionsdüse mit geöffneter Düsenöffnung,
Figur 3 eine räumliche Ansicht der Extrusionsdüse mit teilweise geschlossener Düsenöffnung,
Figur 4 eine Seitenansicht der Extrusionsdüse mit teilweise geschlossener Düsenöffnung,
Figur 5 einen schematischen Querschnitt der Düsenöffnung,
Figur 6 einen schematischen Querschnitt der Gleitführung,
Figur 7 eine räumliche Ansicht der alternativen Extrusionsdüse mit geöffneter Düsenöffnung,
Figur 8 eine Seitenansicht der alternativen Extrusionsdüse mit geöffneter Düsenöffnung und
Figur 9 eine Seitenansicht der alternativen Extrusionsdüse mit teilweise geschlossener Düsenöffnung.

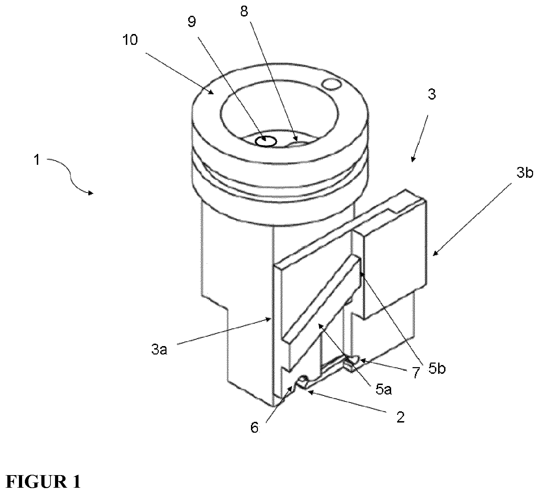

Figur 1 zeigt eine räumliche Ansicht der erfindungsgemäßen Extrusionsdüse (1) mit geöffneter Düsenöffnung (2). Die Extrusionsdüse (1) lässt sich über ein Verbindungsstück (10) mit dem nicht gezeigten Extruder verbinden. Über einen ersten Zuführungskanal (8) und
einen zweiten Zuführungskanal (9) wird die Düsenöffnung (2) mit einer extrudierten Polymerschmelze versorgt. Vor der eigentlichen Düsenöffnung (2) ist der Schieber (3), umfassend einen ersten Teilschieber (3a) und einen zweiten Teilschieber (3b), angeordnet. Der erste Teilschieber (3a) und der zweite Teilschieber (3b) sind über eine Gleitführung (5) verbunden. Die Gleitführung (5) umfasst eine Feder (5a) auf dem ersten Teilschieber (3a) und eine Nut (5b) auf dem zweiten Teilschieber (3b). Der erste Teilschieber (3a) und der zweite Teilschieber (3b) verändern in Abhängigkeit von ihrer Stellung die Öffnungsbreite der Düsenöffnung (2). Der erste Teilschieber (3a) weist im Bereich der Düsenöffnung (2) eine Einkerbung (6) und der zweite Teilschieber eine Einkerbung (7) auf.

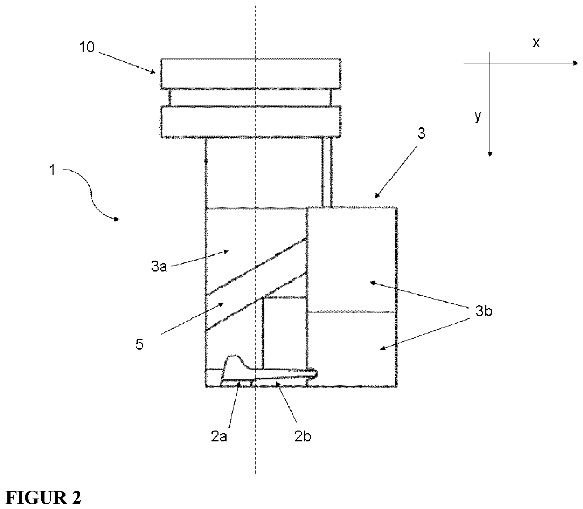

Figur 2 zeigt eine Seitenansicht der Extrusionsdüse mit geöffneter Düsenöffnung (2). Der Aufbau entspricht dem in Figur 1 beschriebenen. Die Extrusionsdüse (1) ist über ein Verbindungsstück (10) mit dem nicht gezeigten Extruder verbunden. Die Düsenöffnung (2) ist in eine Hauptöffnung (2a) und eine mit der Hauptöffnung (2a) verbundene Ausbuchtung (2b) unterteilt. Die gestrichelte Linie deutet die Trennung der beiden Öffnungen der Düsenöffnung (2) an. Der Übergang von der Hauptöffnung (2a) in die Ausbuchtung (2b) ist fließend, wobei die Form des Profilstranges von der Hauptöffnung (2a), die Form der Lippe von der Ausbuchtung (2b) vorgegeben wird. Die Ausdehnung der Düsenöffnung (2) wird über den ersten Teilschieber (3a) und den zweiten Teilschieber (3b) vorgegeben. Der erste Teilschieber (2a) verändert im Wesentlichen die Öffnungsbreite der Hauptöffnung (a) in γ-Richtung. Der zweite Teilschieber (3b) verändert im Wesentlichen die Öffnungsbreite der Ausbuchtung (2b) in x-Richtung. Die Lage der x und γ-Achse ist in Figur 2 im rechten oberen Bildrand abgebildet.

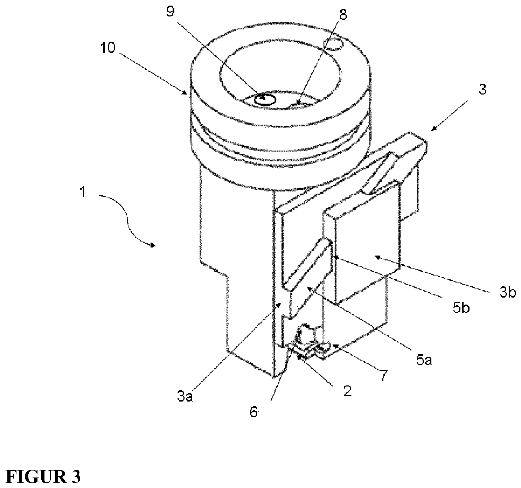

Figur 3 zeigt eine räumliche Ansicht der Extrusionsdüse mit teilweise geschlossener Düsenöffnung (2). Der Aufbau entspricht dem in Figur 1 beschriebenen. Vor der eigentlichen Düsenöffnung (2) sind ein erster Teilschieber (3a) und ein zweiter Teilschieber (3b) angeordnet, die über eine Gleitführung (5) verbunden sind. Die Ausdehnung der Düsenöffnung (2) wird über den ersten Teilschieber (3a) und den zweiten Teilschieber (3b) vorgegeben. Im Vergleich zur Figur 1 ist der zweite Teilschieber (3b) in Richtung der Düsenöffnung (2) und der erste Teilschieber (3a) von der Düsenöffnung (2) weg verschoben.

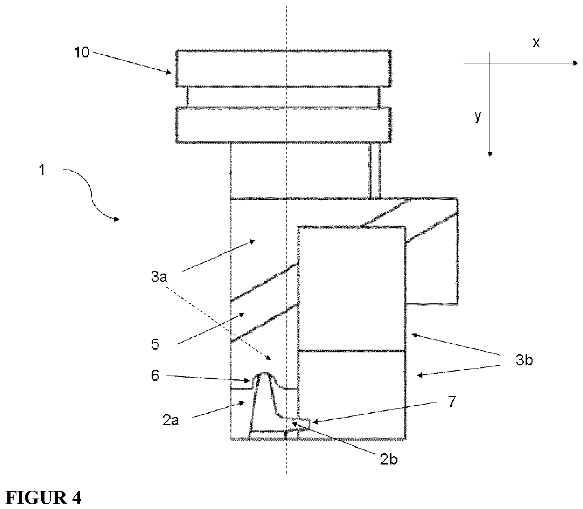

Figur 4 zeigt eine Seitenansicht der Extrusionsdüse mit teilweise geschlossener Düsenöffnung im Bereich Lippe und geöffneter Düsenöffnung im Bereich Spacer (2). Der Grundaufbau entspricht dem in Figur 2 gezeigten Aufbau mit einer geänderten Stellung des ersten Teilschiebers (3a) und des zweiten Teilschiebers (3b). Die Düsenöffnung (2) ist im Bereich der Hauptöffnung (2a) durch den ersten Teilschieber (3a) und im Bereich der Ausbuchtung (2b) durch den zweiten Teilschieber (3b) eingegrenzt. Eine zusätzliche Feineinstellung ist am ersten Teilschieber (3a) durch die Einkerbung (6) möglich, bevorzugt zur Abrundung des Profils. Analog dazu erfolgt die Feineinstellung am zweiten Teilschieber (3b) durch die Einkerbung (7). Die Lage der x und γ-Achse ist in Figur 4 im rechten oberen Bildrand abgebildet.

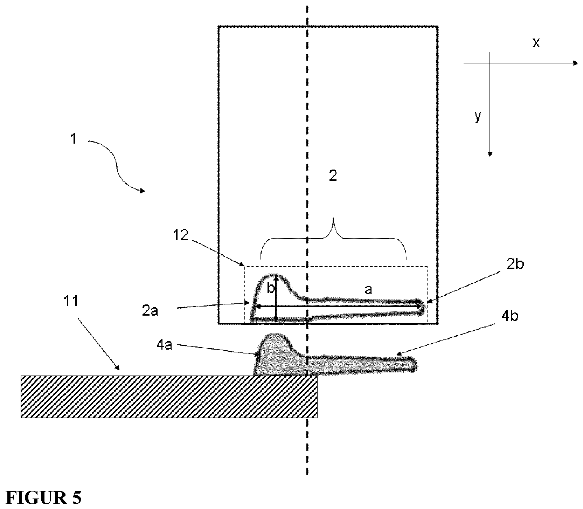

Figur 5 zeigt eine schematische Ansicht der Düsenöffnung (2) ausgerichtet über einem Substrat (11). Die Düsenöffnung (2) umfasst die Hauptöffnung (2a) und Ausbuchtung (2b) entlang der gestrichelten Linie. Die Hauptöffnung (2a) und die Ausbuchtung (2b) gehen bevorzugt fließend ineinander über. Die Ausbuchtung (2b) umfasst bevorzugt 30 % bis 70 % des maximalen Durchmessers der Düsenöffnung (2). Der maximale Durchmesser wird parallel zu der zu beschichtenden Fläche (11) bestimmt. Die Höhe der Hauptöffnung (2a) ergibt sich durch die Achse (b). Der resultierende Extrusionsstrang (Profilstrang) (4a) mit Lippe (4b) entspricht der Hauptöffnung (2a) und Ausbuchtung (2b) der Düsenöffnung (2). Die Geometrie der Düsenöffnung (2) kann auch von dem in Figur 5 gezeigten Bild abweichen und eine freie, variable Gestalt innerhalb des gedachten gestrichelten Rechtecks der maximalen Ausdehnung der Düsenöffnung (12) annehmen.

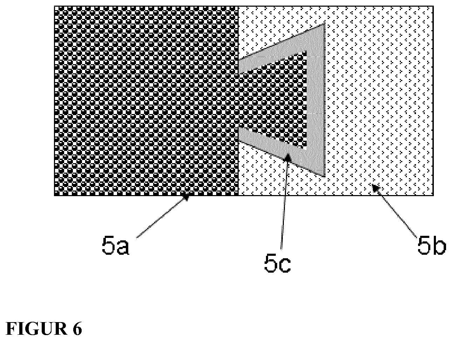

Figur 6 zeigt einen schematischen Querschnitt der Gleitführung (5) am Beispiel des Schwalbenschwanzes. Die Feder (5a) ist innerhalb der Nut (5b) frei beweglich. Ein Schmiermittel (5c), beispielsweise ein Fett, Mineral- oder Silikonöl erleichtert die Bewegung der Feder (5a) und verringert den Reibungs- oder Strömungswiderstand. Die Schwalbenschwanzverbindung verhindert ein Lösen der Gleitführungsverbindung.

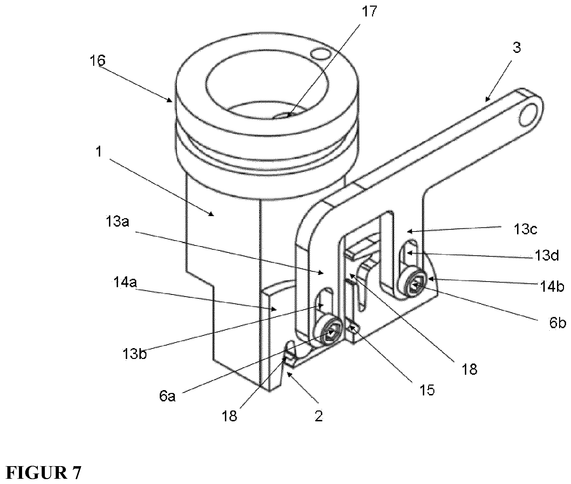

Figur 7 zeigt eine räumliche Ansicht der erfindungsgemäßen Extrusionsdüsenkörper (1) mit geöffneter Düsenöffnung (2). Die Extrusionsdüse (1) lässt sich über ein Verbindungsstück (16) mit dem nicht gezeigten Extruder verbinden. Über einen ersten Zuführungskanal (17) wird die Düsenöffnung (2) mit einer extrudierten Polymerschmelze versorgt. Vor der

Düsenöffnung (2) ist ein horizontal beweglicher Führungsschieber (3) angeordnet. Der Führungsschieber (3) umfasst einen ersten Führungsschieberarm (13a) mit einer ersten Führungsöffnung (13b) und einen zweiten Führungsschieberarm (13c) mit einer zweiten Führungsöffnung (13d). Die Extrusionsdüse umfasst des Weiteren ein erstes Schwenkprofilelement (14a) mit einem abstehenden ersten Führungszylinder (6a) und ein zweites Schwenkprofilelement (14b) mit einem abstehenden zweiten Führungszylinder (6b). Das erste Schwenkprofilelement (14a) und das zweite Schwenkprofilelement (14b) weisen eine Ausbuchtung (10) auf. Die Form der Ausbuchtung (18) ist wie die Form der Düsenöffnung (2) von der Form des gewünschten zu extrudierenden Formkörpers abhängig. Eine Einkerbung (15) im zweiten Schwenkprofilelement (14b) ermöglicht eine weitere Variation des zu extrudierenden Formkörpers.

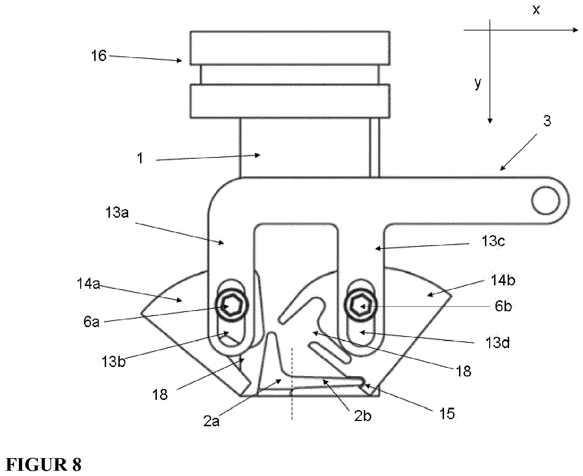

Figur 8 zeigt eine Seitenansicht der Extrusionsdüse mit geöffneter Düsenöffnung (2). Der Aufbau entspricht dem in Figur 7 beschriebenen. Der horizontal bewegliche Führungsschieber (3) ist in x- Richtung verschiebbar. Der Extrusionsdüsenkörper (1) ist über ein Verbindungsstück (16) mit dem nicht gezeigten Extruder verbunden. Die Düsenöffnung (2) ist in eine Hauptöffnung (2a) und eine mit der Hauptöffnung (2a) verbundene Ausbuchtung (2b) unterteilt. Die gestrichelte Linie deutet die Trennung der beiden Öffnungen der Düsenöffnung (2) an. Der Übergang von der Hauptöffnung (2a) in die Ausbuchtung (2b) ist fließend, wobei die Form des Profilstranges von der Hauptöffnung (2a), die Form der Lippe von der Ausbuchtung (2b) vorgegeben wird. Die Ausdehnung der Düsenöffnung (2) wird über das erste Schwenkprofilelement (14a) und das zweite Schwenkprofilelement (14b) reguliert. In Abhängigkeit von der Stellung des Schwenkprofilelements (14a, 14b) und der Form der Ausbuchtung (10) kann die endgültige Form und Geometrie des Profilstranges eingestellt werden. Die Schwenkprofilelemente (14a, 14b) sind über die Führungszylinder (6a, 6b) verstellbar. Die Führungszylinder (6a, 6b) sind innerhalb der Führungsöffnung (13b, 13d) in γ-Richtung verschiebbar.

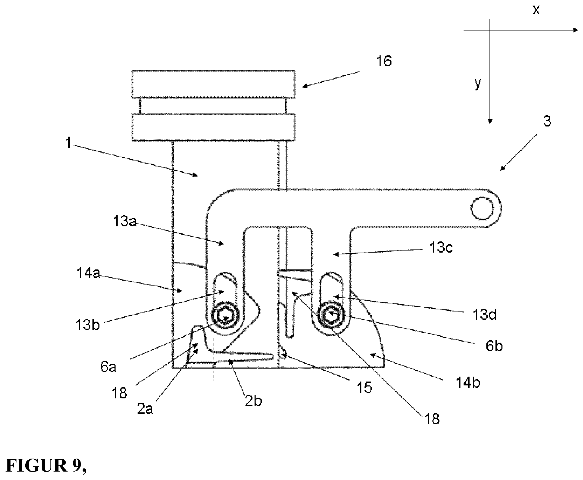

Figur 9 zeigt eine weitere Seitenansicht der Extrusionsdüse mit teilweise geschlossener Düsenöffnung (2). Der Aufbau entspricht dem in Figur 1 und 2 beschriebenen. Aufgrund der im Vergleich zu Figur 2 verschiedenen Stellung der Schwenkprofilelemente (14a, 14b) ist die Hauptöffnung (2a) der Düsenöffnung (2) kleiner als in Figur 2.

### Bezugszeichenliste

- (1): Extrusionsdüsenkörper
- (2): Düsenöffnung
- (2a): Hauptöffnung
- (2b): Ausbuchtung
- (3): Schieber
- (3a): erster Teilschieber
- (3b): zweiter Teilschieber
- (4a): Extrusionsstrang
- (4b): Lippe
- (5): Gleitführung
- (5a): Feder
- (5b): Nut
- (5c): Schmiermittel
- (6): Einkerbung (erster Teilschieber)
- (6a): erster Führungszylinder (Schraube)
- (6b): zweiter Führungszylinder
- (7): Einkerbung (zweiter Teilschieber)
- (8): erster Zuführungskanal
- (9): zweiter Zuführungskanal
- (10): Verbindungsstück
- (11): Substrat
- (12): Maximale Ausdehnung der Düsenöffnung
- (13a): erster Führungsschieberarm
- (13b): erste Führungsöffnung
- (13c): zweiter Führungsschieberarm
- (13d): zweite Führungsöffnung
- (14a): erstes Schwenkprofilelement
- (14b): zweites Schwenkprofilelement
- (15): Einkerbung
- (16): Verbindungsstück
- (17): erster/zweiter Zuführungskanal
- (18): Ausbuchtung (im Schwenkprofilelement)

## Patentansprüche

1. Extrusionsdüse zur Ausbringung eines variablen Profilstranges, mindestens umfassend:
a. einen Extrusionsdüsenkörper (1),
b. eine Düsenöffnung (2) in dem Extrusionsdüsenkörper (1), wobei die Düsenöffnung (2) eine Hauptöffnung (2a) zum Ausformen des Profilstranges und eine mit der Hauptöffnung (2a) verbundene Ausbuchtung (2b) zum Ausformen einer mit dem Profilstrang (4a) verbundenen Lippe (4b) umfasst,
c. einen Schieber (3) vor der Düsenöffnung (2), wobei der Schieber (3) einen hintereinander angeordneten und miteinander über eine Gleitführung (5) verbundenen ersten Teilschieber (3a) und einen zweiten Teilschieber (3b) umfasst, wobei der erste Teilschieber (3a) und der zweite Teilschieber (3b) in der Bewegung miteinander gekoppelt sind und wobei der erste Teilschieber (3a) vertikal verschiebbar ist um die Hauptöffnung (2a) zu verkleinern und der zweite Teilschieber (3b) horizontal verschiebbar ist um die Ausbuchtung (2b) zu verkleinern.

2. Extrusionsdüse nach Anspruch 1, wobei die Gleitführung (5) eine Feder (5a) und eine Nut (5b), formschlüssige Führung, insbesondere Schwalbenschwanz, oder T-Nut, besonders bevorzugt eine Schwalbenschwanzverbindung umfasst.

3. Extrusionsdüse nach Anspruch 1 oder 2, wobei die Gleitführung (5) ein Schmiermittel (5c) umfasst.

4. Extrusionsdüse nach einem der Ansprüche 1 bis 3, wobei der erste Teilschieber (3a) eine Einkerbung (6) im Bereich der Düsenöffnung (2) aufweist.

5. Extrusionsdüse nach einem der Ansprüche 1 bis 4, wobei der zweite Teilschieber (3b) eine Einkerbung (7) im Bereich der Düsenöffnung (2) aufweist.

6. Extrusionsdüse nach einem der Ansprüche 1 bis 5, wobei der Extrusionsdüsenkörper (1) einen ersten Zuführungskanal (8) und einen zweiten Zuführungskanal (9) umfasst.

7. Extrusionsdüse nach Anspruch 6, wobei der erste Zuführungskanal (8) und/oder zweite Zuführungskanal (9) Steuerventile enthalten.

8. Extrusionsdüse nach einem der Ansprüche 1 bis 7, wobei die Düsenöffnung (2) eine Fläche (12) innerhalb eines gedachten Rechtecks mit den Kantenlängen 5 mm bis 50 mm und 2 mm bis 20 mm, bevorzugt mit den Kantenlängen 10 mm bis 30 mm und 5 mm bis 15 mm aufweist.

9. Extrusionsdüse zur Ausbringung eines variablen Profilstranges, mindestens umfassend:
a. einen Extrusionsdüsenkörper (1),
b. eine Düsenöffnung (2) in dem Extrusionsdüsenkörper (1),
c. einen vor der Düsenöffnung (2) horizontal beweglichen Führungsschieber (3) umfassend
einen ersten Führungsschieberarm (13a) mit einer ersten Führungsöffnung (13b) und einen zweiten Führungsschieberarm (13c) mit einer zweiten Führungsöffnung (13d),
ein erstes Schwenkprofilelement (14a) mit einem abstehenden ersten Führungszylinder (6a) und ein zweites Schwenkprofilelement (14b) mit einem abstehenden zweiten Führungszylinder (6b), wobei das erste Schwenkprofilelement (14a) und das zweite Schwenkprofilelement (14b) eine Ausbuchtung (18) aufweisen und
d. wobei der erste Führungszylinder (6a) innerhalb der ersten Führungsöffnung (13b) und der zweite Führungszylinder (6b) innerhalb der zweiten Führungsöffnung (13d) beweglich gelagert sind und das erste Schwenkprofilelement (14a) und das zweite Schwenkprofilelement (14b) gleichzeitig parallel zum Führungsschieber (3) vor der Düsenöffnung (2) drehbar sind.

10. Extrusionsdüse nach Anspruch 9, wobei die erste Führungsöffnung (13b) und/oder die zweite Führungsöffnung (13d) ein Schmiermittel (13e) umfasst.

11. Extrusionsdüse nach einem der Ansprüche 9 oder 10, wobei der Führungsschieber (3) über eine Gleitführung, bevorzugt einen Schwalbenschwanz, mit dem Extrusionsdüsenkörper (1) verbunden ist.

12. Verfahren zur kontinuierlichen Extrusion eines variablen Profilstrangs auf ein Substrat (12), wobei ein Polymer über eine Extrusionsdüse nach einem der Ansprüche 1 bis 11 auf einem Substrat aufgebracht wird.

13. Verwendung der Extrusionsdüse nach einem der Ansprüche 1 bis 11 zur Extrusion eines variablen Profilstranges auf Glas, Polymeren oder Metallen, besonders eines variablen Profilstranges auf einer Fahrzeugverglasung, Unterbodenabdeckung oder Schläuchen.

## Claims

1. Extrusion die for outputting a variable profile strand, at least comprising:
a. an extrusion die body (1),
b. a die orifice (2) in the extrusion die body (1), wherein the die orifice (2) comprises a main orifice (2a) for shaping the profile strand and a bulge (2b) connected to the main orifice (2a) for shaping a lip (4b) connected to the profile strand (4a),
c. a slide (3) in front of the die orifice (2), wherein the slide (3) comprises a first sub-slide (3a) and a second sub-slide (3b) arranged one behind the other and connected to each other by a sliding guide (5), wherein the first sub-slide (3a) and the second sub-slide (3b) are coupled to each other in movement and wherein the first sub-slide (3a) is vertically displaceable in order to reduce the size of the main orifice (2a) and the second sub-slide (3b) is horizontally displaceable in order to reduce the size of the bulge (2b).

2. Extrusion die according to claim 1, wherein the sliding guide (5) comprises a tongue (5a) and a groove (5b), formfitting guide, in particular a dovetail or T-groove, particularly preferably a dovetail connection.

3. Extrusion die according to claim 1 or 2, wherein the sliding guide (5) includes a lubricant (5c).

4. Extrusion die according to one of claims 1 through 3, wherein the first sub-slide (3a) has an indentation (6) in the region of the die orifice (2).

5. Extrusion die according to one of claims 1 through 4, wherein the second sub-slide (3b) has an indentation (7) in the region of the die orifice (2).

6. Extrusion die according to one of claims 1 through 5, wherein the extrusion die body (1) includes a first feed channel (8) and a second feed channel (9).

7. Extrusion die according to claim 6, wherein the first feed channel (8) and/or the second feed channel (9) include control valves.

8. Extrusion die according to one of claims 1 through 7, wherein the die orifice (2) has an area (12) inside an imaginary rectangle with side lengths 5 mm to 50 mm and 2 mm to 20 mm, preferably with side lengths 10 mm to 30 mm and 5 mm to 15 mm.

9. Extrusion die for outputting a variable profile strand, at least comprising:
a. an extrusion die body (1),
b. a die orifice (2) in the extrusion die body (1),
c. a guide slide (3) horizontally movable in front of the die orifice (2), comprising
a first guide slide arm (13a) with a first guide opening (13b) and a second guide slide arm (13c) with a second guide opening (13d),
a first pivoting profile element (14a) with a protruding first guide cylinder (6a) and a second pivoting profile element (14b) with a protruding second guide cylinder (6b), wherein the first pivoting profile element (14a) and the second pivoting profile element (14b) have an indentation (18), and
d. wherein the first guide cylinder (6a) and the second guide cylinder (6b) are movably mounted inside the second guide opening (13d) and the first pivoting profile element (14a) and the second pivoting profile element (14b) are simultaneously rotatable parallel to the guide slide (3) in front of the die opening (2).

10. Extrusion die according to claim 9, wherein the first guide opening (13b) and/or the second guide opening (13d) includes a lubricant (13e).

11. Extrusion die according to one of claims 9 or 10, wherein the guide slide (3) is connected to the extrusion die body (1) via a slide guide, preferably a dovetail.

12. Method for continuous extrusion of a variable profile strand onto a substrate (12), wherein a polymer is applied on a substrate via an extrusion die according to one of claims 1 through 11.

13. Use of the extrusion die according to one of claims 1 through 11 for extrusion of a variable profile strand of glass, polymers, or metals, in particular a variable profile strand onto a vehicle glazing, underbody cover, or hoses.

## Revendications

1. Buse d'extrusion pour déposer une bande profilée variable, comportant au moins :
a. un corps de buse d'extrusion (1) ;
b. un orifice de buse (2) ménagé dans le corps de buse d'extrusion (1), l'orifice de buse (2) comportant un orifice principal (2a) pour former la bande profilée et une indentation (2b) reliée à l'orifice principal (2a) pour former une lèvre (4b) reliée à la bande profilée (4a) ;
c. un coulisseau (3) situé devant l'orifice de buse (2), le coulisseau (3) comportant une première partie de coulisseau (3a) et une seconde partie de coulisseau (3b) disposées l'une derrière l'autre et reliées l'une à l'autre par un guide coulissant (5), la première partie de coulisseau (3a) et la seconde partie de coulisseau (3b) étant couplées pour être solidaires en mouvement et la première partie de coulisseau (3a) étant apte à coulisser verticalement pour diminuer l'orifice principal (2a) et la seconde partie de coulisseau (3b) étant apte à coulisser horizontalement pour diminuer l'indentation (2b).

2. Buse d'extrusion selon la revendication 1, dans laquelle le guide coulissant (5) comporte une languette (5a) et une rainure (5b), un guide par complémentarité de formes, en particulier une queue d'aronde, ou une rainure en T, de façon particulièrement préférée un assemblage à queue d'aronde.

3. Buse d'extrusion selon l'une des revendications 1 ou 2, dans laquelle le guide coulissant (5) comporte un lubrifiant (5c).

4. Buse d'extrusion selon l'une des revendications 1 à 3, dans laquelle la première partie de coulisseau (3a) présente une encoche (6) dans la région de l'orifice de buse (2).

5. Buse d'extrusion selon l'une des revendications 1 à 4, dans laquelle la seconde partie de coulisseau (3b) présente une encoche (7) dans la région de l'orifice de buse (2).

6. Buse d'extrusion selon l'une des revendications 1 à 5, dans laquelle le corps de buse d'extrusion (1) présente un premier canal d'amenée (8) et un second canal d'amenée (9).

7. Buse d'extrusion selon la revendication 6, dans laquelle le premier canal d'amenée (8) et/ou le second canal d'amenée (9) contiennent des soupapes de commande.

8. Buse d'extrusion selon l'une des revendications 1 à 7, dans laquelle l'orifice de buse (2) présente une surface (12) à l'intérieur d'un rectangle fictif ayant les longueurs de côté 5 mm à 50 mm et 2 mm à 20 mm, de préférence ayant les longueurs de côté 10 mm à 30 mm et 5 mm à 15 mm.

9. Buse d'extrusion pour déposer une bande profilée variable, comportant au moins :
a. un corps de buse d'extrusion (1) ;
b. un orifice de buse (2) ménagé dans le corps de buse d'extrusion (1) ;
c. un coulisseau de guidage (3) déplaçable horizontalement devant l'orifice de buse (2), comportant
un premier bras de coulisseau de guidage (13a) ayant un premier orifice de guidage (13b) et un second bras de coulisseau de guidage (13c) ayant un second orifice de guidage (13d),
un premier élément profilé pivotant (14a) ayant un premier cylindre de guidage (6a) faisant saillie et un second élément profilé pivotant (14b) ayant un second cylindre de guidage faisant saillie (6b), le premier élément profilé pivotant (14a) et le second élément profilé pivotant (14b) présentant une indentation (18) et
d. le premier cylindre de guidage (6b) étant monté déplaçable à l'intérieur du premier orifice de guidage (13b) et le second cylindre de guidage (6b) étant monté déplaçable à l'intérieur du second orifice de guidage (13d), et le premier élément profilé pivotant (14a) et le second élément profilé pivotant (14b) étant aptes à tourner simultanément parallèlement au coulisseau de guidage (3) devant l'orifice de buse (2).

10. Buse d'extrusion selon la revendication 9, dans laquelle le premier orifice de guidage (13b) et/ou le second orifice de guidage (13d) comportent un lubrifiant (13e).

11. Buse d'extrusion selon l'une des revendications 9 ou 10, dans laquelle le coulisseau de guidage (3) est relié au corps de buse d'extrusion (1) par un guide coulissant, de préférence une queue d'aronde.

12. Procédé pour l'extrusion continue d'une bande profilée variable sur un substrat (12), dans lequel un polymère est appliqué sur un substrat à l'aide d'une buse d'extrusion selon l'une des revendications 1 à 11.

13. Utilisation de la buse d'extrusion selon l'une des revendications 1 à 11 pour l'extrusion d'une bande profilée variable sur du verre, des polymères ou des métaux, en particulier d'une bande profilée variable sur un vitrage d'automobile, un revêtement de plancher ou des tuyaux flexibles.
